# FASCICULE DE BREVET EUROPEEN

(11) **EP 4 554 914 B1**
(45) Date de publication et mention de la délivrance du brevet: **02.09.2026**
(21) Numéro de dépôt: 23739286.5
(22) Date de dépôt: 10.07.2023
(51) Int. Cl.: C03C 25/106, C03C 25/1065, G02B 6/10, C03C 25/104, C01B 21/064, C01B 33/20, C03C 25/12, C03C 25/42, G02B 6/02

(54) **UTILISATION D'UNE FIBRE OPTIQUE COMPRENANT UN REVETEMENT A BASE DE NITRURE DE BORE DANS UN PROCEDE DE FABRICATION ADDITIVE DE STRUCTURES CERAMIQUES**
VERWENDUNG EINER GLASFASER MIT EINER BORNITRIDBESCHICHTUNG IN EINEM VERFAHREN ZUR GENERATIVEN FERTIGUNG VON KERAMIKSTRUKTUREN
USE OF AN OPTICAL FIBRE COMPRISING A BORON NITRIDE COATING IN A METHOD FOR THE ADDITIVE MANUFACTURING OF CERAMIC STRUCTURES

(30) Priorité: 12.07.2022 FR 2207160; 25.05.2023 FR 2305200
(43) Date de publication de la demande: 21.05.2025
(73) Titulaire: Centre National de la Recherche Scientifique, 75016 Paris (FR); Commissariat à l'Energie Atomique et aux Energies Alternatives, 75015 Paris (FR); Université de Lille, 59800 Lille (FR)
(72) Inventeur: BERNARD, Rémy, 59110 LA MADELEINE (FR); PASTRE, Aymeric, 59810 LESQUIN (FR); LAGO RACHED, Laure, 91191 Gif-sur-Yvette Cedex (FR); LAFFONT, Guillaume, 91191 Gif-sur-Yvette Cedex (FR); LERNER, Alexandre, 91191 Gif-sur-Yvette Cedex (FR)
(74) Mandataire: Santarelli
(86) Numéro de dépôt international: PCT/EP2023/068996
(87) Numéro de publication internationale: WO 2024/013065

(56) Documents cités:
- WO-A1-2020/222152
- US-A1- 2015 104 641
- LUAN XIN'GANG ET AL: "Design, preparation, and properties of a boron nitride coating of silica optical fiber for high temperature sensing applications", JOURNAL OF ALLOYS AND COMPOUNDS, ELSEVIER SEQUOIA, LAUSANNE, CH, vol. 850, 20 August 2020 (2020-08-20), XP086260632, ISSN: 0925-8388, [retrieved on 20200820], DOI: 10.1016/J.JALLCOM.2020.156782

## Description

### Domaine technique

La présente invention concerne l'utilisation de fibres optiques comprenant un revêtement à base de nitrure de bore (BN), dans un procédé de fabrication additive de structures céramiques. La présente invention concerne également des structures céramiques obtenues par fabrication additive comportant un composant optique comprenant une ou plusieurs fibres optiques telles que définies ci-dessus.

### État de la technique

Les fibres optiques revêtues de nitrure de bore sont connues dans l'état de la technique ; voir par exemple Luan Xin'gang et al: "Design, preparation, and properties of a boron nitride coating of silica optical fiber for high temperature sensing applications", Journal of Alloys and Compounds, 2021, vol. 850, 156782 et WO 2020/222152 A1.

Les procédés de Fabrication Additive (FA) permettent la réalisation couche-par-couche de pièces céramiques aux géométries complexes telles que par exemple des pièces comprenant des évidements, ou des pièces constituées d'une structure lattice, ou des pièces présentant des singularités géométriques difficilement obtenable grâce à un procédé de fabrication soustractif.

Il existe différents types de procédé de Fabrication Additive. On peut citer en exemple l'extrusion de matériau, la projection plasma, la projection thermique, le dépôt de matière direct, la fusion sélective sur lit de poudre, le frittage sélectif sur lit de poudre, la projection de liant (en anglais, *binderjetting)* la photo-polymérisation.

Le choix du procédé de FA est généralement dicté par le matériau d'intérêt, les contraintes géométriques du modèle à fabriquer, les caractéristiques finales de la pièce (mécanique, thermique, esthétique). Les structures réalisées par FA en matériau céramique peuvent être exposées à des conditions environnementales extrêmes. Instrumenter ces pièces à cœur permet de proposer un suivi *in situ* du procédé de FA et par la suite de surveiller la santé matière ou les différents chargements thermomécaniques auxquelles elles peuvent être soumises durant leur cycle de vie.

Ces structures céramiques réalisées par FA peuvent être, par exemple, utilisées dans les industries aéronautiques afin de réaliser des mesures au sein des environnements fonctionnant à haute température comme des moteurs, ou aérospatiale (aubes de turbines/stators, environnement cryogéniques comme des réservoirs de stockage de gaz en phase liquide), dans le domaine des énergies (turbines à gaz), voire dans l'industrie nucléaire (mesures en environnement haute température et/ou sous radiations). Ces procédés peuvent avoir pour application la fabrication de structures poreuses, de turbines architectures, de rotors, de moules de fonderie, d'éléments de liaison comme des engrenages [1].

Les capteurs à fibre optique (CFOs) permettent de mesurer de manière distribuée ou répartie des paramètres physiques telles que la température et/ou la déformation voire la pression. Ils sont peu intrusifs (diamètre de l'ordre de la centaine de microns), sont insensibles aux perturbations électromagnétiques et permettent de réaliser ces mesures sur de larges plages de température, typiquement jusqu'à *T* ≥ 800°C.

Ainsi, contrairement à des capteurs tels que des thermocouples par exemple, les CFOs permettent une mesure multipoint et multiparamétrique du milieu environnant.

L'intégration de CFOs au sein de procédés de FA est typiquement réalisée par une interruption ponctuelle de l'impression, un positionnement adapté du capteur, puis l'achèvement de la construction de la pièce.

Les pièces céramiques réalisées par FA, notamment dans les procédés d'extrusion de matériau, le dépôt d'énergie dirigé, la fabrication d'objets laminés, la projection de matériau incluant l'extrusion de matériau, le dépôt d'énergie dirigé, la fabrication d'objets laminés, la projection de matériau incluant la projection thermique et la projection plasma, la fusion sélective ou le frittage sélectif sur lit de poudre, la photopolymérisation peuvent être soumises à de très hautes températures (*T* ≥ 800°C). Le CFO intégré doit ainsi former une interface mécaniquement favorable avec la matrice environnant afin de mesurer pertinemment les paramètres physiques d'intérêt (bon contact thermique pour minimiser le temps de réponse, bonne accroche pour optimiser la transduction des déformations mécaniques et éviter les problèmes de glissement de la fibre par rapport à la structure hôte). Un revêtement déposé sur la gaine en verre de la fibre optique permet de la protéger durant la phase d'intégration du capteur (manipulations par un opérateur ou pendant la mise en œuvre du procédé), mais également de former cette interface.

Cependant, les matériaux actuellement disponibles pour ces revêtements ne résistent pas à des températures aussi élevées sur de longues durées d'utilisation (typiquement 350°C pour les revêtements polymériques et au plus 700°C pour les revêtements métalliques).

En outre, ces matériaux présentent une rugosité bien trop faible pour former de manière certaine une accroche mécanique suffisante à la pièce imprimée, mettant en péril le transfert des efforts mécaniques ou des vibrations, voire le temps de réponse en température (poches d'air interstitielles). Il en résulte des CFOs qui n'ont pas les qualités requises à leur utilisation.

Ces matériaux présentent également un coefficient de dilatation thermique très différent de celui de la matrice céramique imprimée. Il en résulte des contraintes liées à la dilatation différentielle des deux matériaux qui peuvent subvenir lors de la mise en température de la pièce. Ces contraintes peuvent engendrer une décohésion de l'interface fibre/matrice, une dégradation du revêtement ou encore une rupture de la fibre optique.

Il existe donc un besoin de proposer une fibre optique dont le revêtement la rend suffisamment résistante pour supporter les conditions extrêmes des procédés de FA, notamment pour les procédés permettant l'intégration : extrusion de matériau, le dépôt d'énergie dirigé, la fabrication d'objets laminés, la projection de matériau incluant la projection thermique et la projection plasma, la fusion sélective ou le frittage sélectif sur lit de poudre ou encore la photopolymérisation.

Les solutions existantes reposent sur l'utilisation de revêtements polyimide [2] ou métalliques [3,4]. Ces matériaux ont néanmoins le désavantage de se dégrader à des températures trop faibles (environ 350°C) par rapport à celles auxquelles les pièces réalisées en FA céramiques peuvent être exposées. Ils ne sont donc pas adaptés à une utilisation dans un procédé de FA [5].

Wnuk *et al.* [2] présentent l'intégration de CFOs à Réseaux de Bragg (RdBs), inscrits dans une fibre optique regainée par du polyimide, dans de l'alumine (Al₂O₃) projetée. Bien que la tenue en température du capteur intégré n'ait pas été investiguée, la tenue long terme de ce matériau de revêtement n'est garantie que pour des températures ≤ 350°C, ce qui n'est pas suffisant.

Duo *et al.* [4] ont intégré des fibres optiques revêtues d'aluminium par projection thermique à la flamme d'alumine (projection thermique) sur un substrat d'aluminium. Bien qu'aucun essai en température n'ait été mené sur les échantillons instrumentés, la transmission optique de la fibre est suivie durant le procédé de dépôt. L'exposition potentielle de l'échantillon à de hautes températures est limitée, d'une part, par le choix du matériau sur lequel est fixé la fibre optique (aluminium : fusion à -660°C), et d'autre part par le choix du revêtement de la fibre (également constitué d'aluminium : utilisation à *T*≤ 400°C), ce qui n'est pas suffisant.

Lei *et al.* [6] ont intégré un FPI (Fabry-Pérot intrinsèque) inscrit au laser femtoseconde au sein d'une fibre en verre de silice. Le CFO non-revêtu (i.e. Ø125 µm de silice) est placé dans une rainure usinée dans un substrat en alumine, puis noyé dans une pâte chargée d'alumine. Le tout est ensuite localement chauffé à l'aide d'un laser CO₂ permettant la consolidation du matériau d'apport, c'est-à-dire la pâte chargée d'alumine. Des mesures sont réalisées jusqu'à 800°C sur l'échantillon instrumenté. La fibre optique n'a pas subi de traitement thermique préalable à son intégration, et la sortie de pièce en silice non revêtue est supposément très fragile après l'exposition à 800°C, rendant la manipulation de l'échantillon très délicate et n'est donc pas satisfaisant. De plus, le procédé décrit, et permettant l'insertion de la fibre optique dans la matrice céramique, est très complexe à mettre en œuvre.

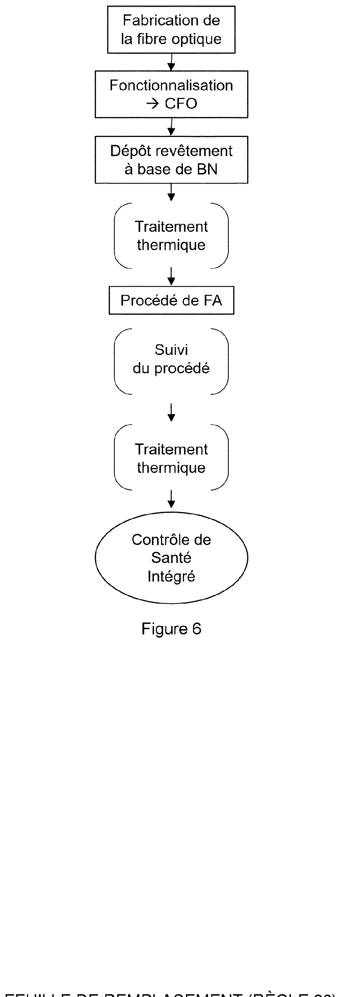

Les travaux de Petrie *et al.* [7,8] portent sur l'intégration de fibres optiques en silice au sein de carbure de silicium (SiC). Une pièce est d'abord construite par projection de liant, procédé au cours duquel des couches de particules de SiC sont liées par un matériau spécifique, résultant en une pièce mécaniquement très fragile. Elle est ensuite séchée (à environ 190°C) puis densifiée grâce au procédé de Chemical Vapor Infiltration (CVI). Une réaction chimique sous gaz neutre et à environ 1000°C conduit à la formation de SiC cristallin ainsi que l'évacuation des liants, issus de la FA par projection de liant. Ces étapes sont très complexes à mettre en œuvre. De plus, la méthode décrite (étape CVI) ne permet a priori pas de réaliser de grandes dimensions de pièces, requiert un temps de fabrication très long (réaction de cristallisation d'au moins 5h), a un coût associé très impactant, et présente l'inconvénient supplémentaire de mettre en œuvre des réactifs ayant une grande toxicité. Dans un premier temps, les auteurs présentent des essais de compatibilité matériau entre les revêtements de fibres optiques et le SiC obtenu par CVI, sur des sections de fibre optique en silice : non-revêtue, revêtue d'or, et d'argent. Ils montrent qu'après l'exposition à environ 1000°C lors du procédé de CVI, une fusion partielle des revêtements métalliques est visible (Figure 6 de Réf. [7]). Cette observation corrobore la limite d'utilisation des revêtements métalliques à des températures *T* ≤ 700°C comme indiqué par les différents fournisseurs. L'option de la fibre optique « nue » est décrite comme la plus adaptée à leur besoin (meilleure interface avec le SiC), cependant les auteurs mentionnent clairement les difficultés de manipulation d'une fibre optique en silice nue après une exposition à de telles températures (extrême fragilité en l'absence de revêtement de protection). Dans un second temps, lors de l'intégration par CVI de fibres optiques en silice revêtues de différents matériaux - acrylate (polymère) et ormocer *(organically modified ceramic)* - placées dans des capillaires en Mo, les revêtements ont, comme attendu, complètement brulé. Des distorsions imprévues des capillaires Mo à haute température ont entrainé leur rupture. Cette casse est décrite comme accidentelle par les auteurs, et uniquement due à un défaut de fixation des capillaires, n'accommodant pas suffisamment les dilatations thermiques auxquelles les structures ont été exposées durant la CVI.

Dans le cas de ces travaux, l'utilisation des revêtements métalliques s'est révélée non pertinente en regard des températures imposées par le CVI, et l'option de l'utilisation d'une fibre optique « nue » n'est pas une solution pérenne au vu de son extrême fragilité après exposition à de hautes températures.

Ainsi à la connaissance des demanderesses, il n'existe pas de fibre optique qui ait les propriétés requises pour être mise en œuvre dans un procédé FA.

Certaines étapes liées au procédé d'intégration sont limitées en température du fait de la tenue thermique des revêtements utilisés (environ 350°C pour le polyimide et environ 400°C pour l'aluminium) :
- Stabilisation des contraintes résiduelles au sein de la fibre optique issues du procédé de fibrage,
- Recuit de la pièce ou traitement de stabilisation de la matrice céramique.

Ensuite, ces limites affectent la plage d'utilisation des pièces instrumentées. Il est également montré que l'utilisation d'une fibre optique « nue » permet, dans certains cas, d'atteindre ces hautes températures de fonctionnement (*T* ≥ 800°C), mais que cette option n'est pas viable dans une optique d'instrumentation de pièce en milieu difficile, où les systèmes sont destinés à être manipulés, pouvant induire des courbures et/ou rayures aux fibres optiques. Ces sollicitations, appliquées à une fibre optique en silice sans revêtement entrainent inévitablement leur rupture.

Il existe donc un besoin pour la mise en œuvre de procédé FA, d'une fibre optique dont la résistance permette de maintenir son intégrité jusqu'à son point d'entrée dans la pièce instrumentée, et également de garantir une interface matrice céramique/CFO saine jusqu'à au moins 1000°C.

Toutefois, aucun des documents mentionnés n'enseigne une fibre ayant les propriétés requises pour une telle utilisation.

La présente invention propose ainsi l'utilisation d'une fibre optique comportant un revêtement extérieur comprenant un mélange de nitrure de bore hexagonal et de bentonite, à raison d'au moins 10 % en poids de bentonite par rapport au poids total dudit revêtement extérieur, dans un procédé de fabrication additive de structures céramiques. L'utilisation selon l'invention permet de développer et fabriquer des capteurs à fibre optique revêtus d'un matériau céramique d'épaisseur contrôlable en vue de leur intégration au sein de structures céramiques produites par fabrication additive, formant une interface mécaniquement fiable avec la matrice jusqu'à de très hauts niveaux de température, par exemple 800°C ou plus élevés. L'invention concerne également des structures céramiques comportant un composant optique comprenant une ou plusieurs fibres optiques telles que définies ci-dessus.

### Description de l'invention

Afin de résoudre les problèmes mentionnés ci-dessus, le demandeur a mis au point l'utilisation d'une fibre dans un procédé de fabrication additive de structures céramiques, ladite fibre comprenant une âme en matériau fibrable et présentant une surface externe, ladite fibre étant caractérisée en ce qu'elle comporte en outre un revêtement extérieur comportant un mélange de nitrure de bore hexagonal et de bentonite, à raison d'au moins 10 % en poids de bentonite par rapport au poids total dudit revêtement extérieur.

En deçà de 10 % en poids de bentonite par rapport au poids total dudit revêtement extérieur, le revêtement n'adhère pas à la fibre, tandis qu'au-dessus 35 % en poids de bentonite par rapport au poids total dudit revêtement extérieur, la fibre ainsi revêtue n'est plus assez flexible.

On entend par matériau fibrable, un matériau permettant un fibrage, c'est-à-dire qui peut subir une transformation d'un matériau massif en fibre. Il peut s'agir d'un matériau vitreux présentant une transition vitreuse permettant son étirage. De préférence, l'âme peut être constituée d'un matériau choisi parmi les matériaux à transition vitreuse et le verre de saphir.

Avantageusement, le revêtement extérieur peut être directement en contact avec l'âme.

Avantageusement, quel que soit le mode de réalisation envisagé, l'âme 11 de la fibre de l'utilisation selon la présente invention peut présenter un diamètre compris dans un intervalle allant de 20 µm à 10 mm, de préférence de 80 µm à 500 µm et de manière encore préférée de 125 µm.

Avantageusement, le revêtement extérieur peut présenter une épaisseur comprise entre 5 µm et 240 µm. Si l'âme est de forme cylindrique, l'épaisseur du revêtement extérieur sera alors une épaisseur radiale comprise entre 5 µm et 240 µm.

Avantageusement, la fibre optique comportant un revêtement extérieur comprenant un mélange de nitrure de bore hexagonal et de bentonite, à raison d'au moins 10 % en poids de bentonite par rapport au poids total dudit revêtement extérieur peut être choisie parmi une fibre optique standard, une fibre multicœur, une fibre microstructurée, une fibre effilée (ou *« taper »* en langue anglaise), un coupleur optique comprenant une ou plusieurs fibres en entrée et une ou plusieurs fibres en sortie, une fibre laser, sans que cette liste ne soit limitative.

Avantageusement, le procédé de fabrication additive mise en œuvre selon l'invention peut comprendre les étapes :
a) fabrication d'une matrice céramique à partir d'un matériau céramique,
b) mise en contact de au moins une fibre 1 avec la matrice céramique obtenue à l'étape a) ;
c) fixation de au moins une fibre 1 à la surface de la matrice céramique, éventuellement à l'aide d'éléments en périphérie de la zone de fabrication, de manière à limiter tout mouvement relatif de ladite au moins une fibre 1 par rapport à la matrice céramique.
d) fabrication d'une matrice complémentaire recouvrant totalement ou partiellement la au moins une fibre 1. L'ensemble formé par les matrices céramiques et la fibre forme une structure céramique selon l'invention.

Avantageusement, la matrice céramique est composée d'un matériau inorganique, généralement composé d'atomes métalliques, métalloïdes ou non-métallique. Il peut s'agir d'oxydes (par exemple : oxyde d'aluminium, oxyde de zirconium, dopés ou non), de non-oxydes (carbures, borures, nitrures), céramiques composées de silicium et d'atomes tels que tungstène, magnésium, platine ou encore titane, et de céramiques composites (combinaison des oxydes et des non-oxydes). Le choix de la matière utilisée pour former la matrice est généralement dicté par les contraintes géométriques du modèle à fabriquer, les caractéristiques finales de la structure céramique qui est fabriquée (contraintes mécaniques, thermiques et esthétiques).

On entend par éléments en périphérie de la zone de fabrication, des systèmes mécaniques ou de mesure situés à l'extérieur du volume à l'intérieur duquel la matrice est fabriquée par le procédé, et assistant à la réalisation dudit procédé ; étant entendu que la zone de fabrication est le volume à l'intérieur duquel la matrice est fabriquée à l'aide du procédé de fabrication.

On entend par limitation de tout mouvement relatif de la fibre, une technique permettant de maintenir la fibre en une position fixe, par exemple à l'aide de systèmes mécaniques de fixation ou encore des matériaux adhésifs. L'amplitude de variation de position locale de la fibre acceptable autour de cette dite position fixe de l'espace ainsi que sa fréquence dépendent des conditions expérimentales du procédé investigué.

Avantageusement, le procédé de fabrication additive peut être choisi parmi l'extrusion de matériau, le dépôt d'énergie dirigé, la fabrication d'objets laminés, la projection de matériau incluant la projection thermique et la projection plasma, la fusion sélective ou le frittage sélectif sur lit de poudre, la photopolymérisation.

Avantageusement, le procédé de fabrication d'une structure céramique est un procédé de fabrication d'une structure céramique instrumentée d'un CFO par projection plasma atmosphérique, et comprend les étapes :
a') fabrication d'une matrice céramique à partir d'un matériau céramique par projection plasma atmosphérique,
b') mise en contact d'au moins une fibre 1 avec la matrice céramique obtenue à l'étape a'), et obtention d'une matrice instrumentée ;
c') positionnement de la matrice instrumentée obtenue à l'étape a) dans une enceinte de dépôt, couche-par-couche, d'un matériau céramique, par projection plasma atmosphérique sur la matrice instrumentée et intégration de la au moins une fibre 1, en recouvrant totalement ou partiellement la au moins une fibre 1 dudit matériau céramique ; et obtention d'une structure céramique instrumentée d'un CFO.

On entend par matrice céramique, un objet tridimensionnel, ou un volume de matière, fabriqué à l'aide d'un procédé de fabrication additive. On entend par matrice instrumentée, le matériau fabriqué à l'aide du procédé de fabrication additive et pouvant subir différents post-traitements, et un volume dudit matériau d'une géométrie définie comprenant un CFO ou une fibre à sa surface ou en son sein.

On entend par matériau céramique, un matériau inorganique composé d'atomes métalliques, métalloïdes ou non-métallique. Il peut s'agir d'oxydes (par exemple : oxyde d'aluminium, oxyde de zirconium, dopés ou non), de non-oxydes (carbures, borures, nitrures), céramiques composées de silicium et d'atomes tels que tungstène, magnésium, platine ou encore titane, et de céramiques composites (combinaison des oxydes et des non-oxydes). Il peut s'agir par exemple d'alumine (Al₂O₃), de zircone (ZrO₂), carbure de silicium (SiC), carbure de tungstène (WC), carbure de bore (B₄C), nitrure de silicium (S₃N₄), nitrure d'aluminium (AIN), diborure de zirconium (ZrB₂).

On entend par enceinte de dépôt, un volume à l'intérieur duquel le dépôt est réalisé à l'aide du procédé de fabrication additive. Ce volume est physiquement délimité par une paroi étanche ou non à l'atmosphère ambiante. Ladite enceinte de dépôt présente un volume dépendant du procédé de fabrication additive, généralement compris entre 0,001 m³ et 200 m³.

Avantageusement, dans le cas où l'enceinte de dépôt est étanche à l'atmosphère extérieure, la composition gazeuse et la pression de l'atmosphère contenue à l'intérieur de l'enceinte de dépôt peuvent être contrôlés.

On entend par dépôt, couche-par-couche, la fabrication d'un volume de matière de géométrie prédéfinie par dépôt incrémental ou successif de volumes de matière intermédiaires circonscrits dans ledit volume de géométrie prédéfinie.

Dans une première variante, le procédé de fabrication d'une structure céramique selon l'invention, comprend les étapes :
i) fabrication d'une matrice céramique à partir d'un matériau céramique dans une enceinte via un dépôt, couche-par-couche du matériau céramique,
ii) mise en contact d'au moins une fibre 1 avec la matrice céramique réalisée à l'étape i) et obtention d'une matrice instrumentée ;
iii) positionnement de la matrice instrumentée obtenus à l'étape ii) dans une enceinte de dépôt et dépôt, couche-par-couche, du matériau céramique sur la matrice instrumentée afin d'intégrer la au moins une fibre 1, en recouvrant totalement ou partiellement la au moins une fibre 1 dudit matériau céramique ; et obtention d'une structure instrumentée d'un CFO,
iv) mise en contact d'au moins une autre fibre 1 avec la matrice fabriquée lors de l'étape iii) tel que décrit dans l'étape ii) et dépôt d'une nouvelle épaisseur de matrice pour intégrer ces fibres tel que décrit dans l'étape iii), le nombre d'itération de l'étape iv) étant supérieur ou égal à 1, de préférence de 1 à 5 itérations,
v) optionnellement post traitement physico-chimique de la pièce obtenue à la suite des étapes précédentes, par immersion dans un solvant organique et/ou exposition à une température supérieure à 200°C ,
vi) optionnellement traitement thermique de la pièce obtenue à l'étape v), ledit traitement consistant à exposer la pièce à une température supérieure à 600°C.

Dans une seconde variante, le procédé de fabrication d'une structure céramique selon l'invention, comprend les étapes :
i') fabrication d'une matrice céramique à partir d'un matériau céramique, dans une enceinte de dépôt, via un dépôt, couche-par-couche du matériau céramique,
ii') mise en contact d'au moins une fibre 1 et de la matrice céramique réalisée à l'étape i'), à l'intérieur de l'enceinte de dépôt ;
iii') dépôt, couche-par-couche, d'un matériau céramique sur la matrice instrumentée en recouvrant totalement ou partiellement la au moins une fibre 1 dudit matériau céramique afin d'intégrer les fibres 1, et obtention d'une structure instrumentée d'un CFO, le nombre d'itération de l'étape iii') étant supérieur ou égal à 1, de préférence de 1 à 5 itérations,
iv') optionnellement post traitement physico-chimique de la pièce obtenue à la suite des étapes précédentes, par immersion dans un solvant organique, et/ou exposition à une température supérieure à 200°C.
v') optionnellement traitement thermique de la pièce prétraitée obtenue à l'étape iv'), ledit traitement consistant à exposer la pièce à une température supérieure à 600°C.

La présente invention a également pour objet une structure céramique comportant un composant optique comprenant une ou plusieurs fibres optiques selon l'invention. La structure céramique selon l'invention est de préférence choisie parmi une aube de turbines/stators, un rotor, un moule de fonderie, un élément de liaison tel que des engrenages, une structure poreuse telle qu'un filtre.

Avantageusement, la structure céramique selon l'invention est obtenue par un procédé de fabrication additive, en particulier un procédé tel que décrit ci-dessus.

Avantageusement, la structure céramique selon l'invention est composée d'au moins un composant optique comprenant une ou plusieurs fibres optiques selon l'invention et d'une matrice céramique, ladite matrice étant composée d'un matériau inorganique tel que des oxydes, des non-oxydes, ou une combinaison d'oxydes et de non-oxydes.

Dans le cadre de l'invention, on entend par composant optique, un capteur à fibre optique de type réseaux de Bragg, chapelets de réseaux de Bragg multiplexés spectralement ou temporellement, réseaux de Bragg quasi-continus interrogeables en réflectométrie fréquentielle, réseaux de Bragg régénérés, de type II ou chapelets de microbulles, sondes Rayleigh avec ou sans amplification par des nanoparticules intégrées à la matrice vitreuse ou par des nano-réseaux obtenus par insolation femtoseconde de la matrice vitreuse, Fabry-Pérot intrinsèques ou extrinsèques, gravés ou non à l'aide de laser femtoseconde. Ces capteurs à fibre optique peuvent être fabriqués à partir de support tels que : fibre optique standard, fibre multicœur, fibre microstructurée, fibre effilée (ou *« taper »* en langue anglaise), coupleur optique avec une ou plusieurs fibres en entrée et une ou plusieurs fibres en sortie, fibre laser, sans que cette liste ne soit limitative. Lesdits composants optiques sont intégrés au sein de structures céramiques produites par fabrication additive, formant une interface mécaniquement fiable avec la matrice jusqu'à de très hauts niveaux de température et assurant la protection de la fibre optique avant son insertion au sein ou en sub-surface de la pièce.

Les fibres et CFOs mis en œuvre selon l'utilisation ou le procédé selon l'invention permettent en outre de réaliser le suivi *in situ* du procédé de fabrication additive utilisé pour l'intégration. Ce suivi *in situ* peut être réalisé en interrogeant le CFO à l'aide d'un système d'acquisition adapté au type de CFO intégré grâce au procédé de fabrication additive. Les grandeurs mesurées peuvent être, par exemple, la température et/ou la déformation.

Les fibres et CFOs mis en œuvre selon l'utilisation ou le procédé selon l'invention peuvent résister aux traitements thermiques potentiellement appliqués aux pièces issues de fabrication additive destinés à stabiliser leurs propriétés thermomécaniques (déliantage, densification, recuit par exemple, dans la limite de -1000°C pour des fibres optiques en silice). Ce traitement s'accompagne généralement d'un rétreint/compaction de la matière, favorable à la tenue mécanique du CFO intégré car plus résistant en compression qu'en traction.

La pièce en matériau céramique instrumentée du CFO intégré permet la réalisation de mesures, par exemple de température et/ou de déformation, en milieu difficile, et particulièrement à haute température (*T* ≥ 800°C), dans un objectif de Surveillance Santé Matière (Structural Health Monitoring - SHM)

La fibre ou le CFO revêtu du matériau céramique conserve sa fiabilité (métrologique et mécanique) à haute température, ainsi que sa compatibilité avec le matériau de la pièce instrumentée. Il présente également une faible intrusivité (typiquement 100-500 µm de diamètre) au sein des structures et permet la réalisation de mesures multipoint (multiplexage) et multiparamétrique. Le CFO revêtu peut également être intégré suivant un chemin complexe au sein de la pièce instrumentée. Il est également possible d'intégrer plusieurs CFO au sein d'une même pièce, à différents sites d'intérêt.

Avantageusement, la forme des structures céramiques produites à l'aide du procédé de FA peut être plus ou moins complexe suivant l'application visée. Il peut s'agir par exemple de disques, de parallélépipèdes, de formes de révolution comme des cylindres creux ou non, des formes de révolution additionnées d'éléments tels que des ailettes, sans que cette liste ne soit limitative.

Les dimensions des structures céramiques fabriquées sont comprises - suivant un des axes de l'espace - entre 0,1 mm et 1 m et préférablement entre 1 mm et 500 mm.

D'après la référence [9], les matériaux céramiques applicables par projection thermique sont des matériaux à point de fusion élevé tels que les céramiques (oxydes et carbures). On définit les céramiques techniques en trois catégories différentes : les oxydes (par exemple : oxyde d'aluminium, oxyde de zirconium, dopés ou non), les non-oxydes (carbures, borures, nitrures, céramiques composées de silicium et d'atomes tels que tungstène, magnésium, platine ou encore titane), et les céramiques composites (combinaison des oxydes et des non-oxydes).

La au moins une fibre 1 mise en œuvre dans la présente utilisation selon l'invention peut être fabriquée à partir d'une composition pâteuse pour fibre. Le procédé de fabrication d'une composition pâteuse pour revêtement de fibre, peut comprendre les étapes suivantes :
A) dispersion dans de l'eau d'un mélange sec de nitrure de bore BN hexagonal et de bentonite pour assurer un bon mélange de la bentonite et du nitrure de bore, le mélange sec comprenant au moins 10 % en poids de bentonite par rapport au poids total dudit mélange sec, pour former une suspension aqueuse ;
B) évaporation de l'eau contenue dans ladite suspension aqueuse, jusqu'à obtenir un extrait sec pulvérulent ;
C) dispersion dudit extrait sec pulvérulent dans de l'eau pour former une composition pâteuse, à raison d'au moins 40 % massique d'extrait sec dans l'eau.

Avantageusement, l'étape B) du procédé de fabrication d'une composition pâteuse pour revêtement de fibre selon l'invention peut être réalisée sous vide primaire ou sous pression atmosphérique, et à une température pouvant être comprise entre 50°C et 90°C, de préférence entre 60°C et 80°C, et mieux de l'ordre de 60°C.

La composition pâteuse pour revêtement de fibre optique mise en œuvre dans la présente utilisation selon l'invention peut être obtenue par le procédé de fabrication ci-dessus mentionné.

Avantageusement, la composition pâteuse peut en outre comprendre un dopant, qui peut être avantageusement à base de carbone, les oxydes de zirconium, de titane et les nanoparticules de métaux ou de semi-conducteurs, charges organiques (composés moléculaires organiques et organométalliques), charges inorganiques et leurs mélanges.

La fibre mise en œuvre dans l'utilisation selon l'invention peut être fabriquée selon un procédé de fabrication mettant en œuvre une telle composition pâteuse pour obtenir le dépôt d'un revêtement extérieur sur la surface externe d'une fibre, le procédé comprenant les étapes suivantes :
A) fourniture ou réalisation d'une âme de fibre en matériau fibrable (sans revêtement de protection) ;
B) fourniture d'une composition pâteuse pour revêtement de fibre selon l'invention ;
C) enduction d'au moins une partie de ladite fibre avec ladite composition pâteuse de façon à former une couche humide sur ladite fibre ;
D) traitement thermique de ladite fibre optique revêtue de ladite couche humide à une température comprise entre 100°C et 250°C pendant une durée suffisante pour former une couche revêtement extérieur 2 apte à être manutentionnée (en l'occurrence enroulée et manipulée).

Avantageusement, les étapes C et D peuvent être réitérées une ou plusieurs fois jusqu'à obtention de l'épaisseur souhaitée de revêtement extérieur.

Avantageusement, le procédé de fabrication de la fibre peut en outre comprendre une étape A' de dénudation de la fibre selon l'invention, pour supprimer sur au moins une partie de la longueur de la fibre, la gaine de protection présente dans le cas d'une fourniture de fibre commerciale. De préférence, cette étape A' peut être réalisée par mise en contact de la gaine de protection avec une solution de dichlorométhane, dans le cas d'une gaine de protection en polyacrylate. D'autres méthodes de dénudation de la fibre sont possibles, par exemple par dénudation mécanique à la pince ou à la lame de rasoir. Toutefois, en ce qui concerne des fibres optiques destinées à être manipulées au moins une fois, il est préférable de passer par une dénudation chimique.

D'autres avantages et particularités de la présente invention résulteront de la description qui va suivre, donnée à titre d'exemple non limitatif et faite en référence aux figures annexées et aux exemples.

### Brève description des figures

Les exemples suivants illustrent l'invention, en liaison avec les figures commentées ci-dessus, sans toutefois en limiter la portée :

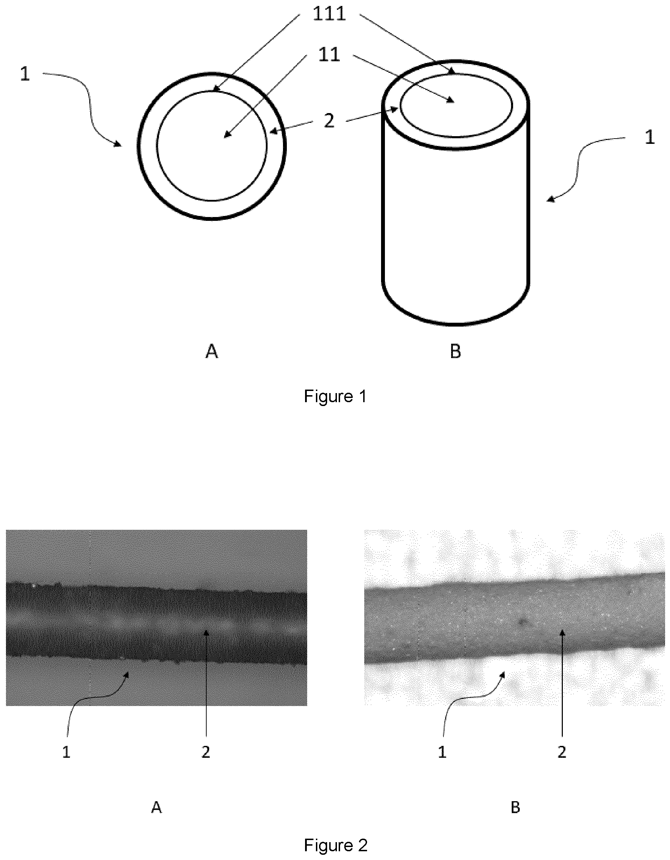

[Fig 1] : La figure 1 représente une vue en coupe transversale (A) et une vue en perspective (B) d'un premier exemple de fibre selon l'invention (fibre sans gaine de protection) ; la fibre 1 comprend une âme 11 en matériau fibrable et présente une surface externe 111, recouverte par un revêtement extérieur 2 à base de nitrure de bore hexagonal et de bentonite.
[Fig 2] : La figure 2 comprend deux photographies au microscope optique de la fibre 1 (post-procédé) recouverte par un revêtement extérieur 2 à base de nitrure de bore hexagonal et de bentonite après un traitement thermique à 1000°C, à différentes distances de focalisation (4A sur les bords de la fibre et 4B à la surface de la fibre).

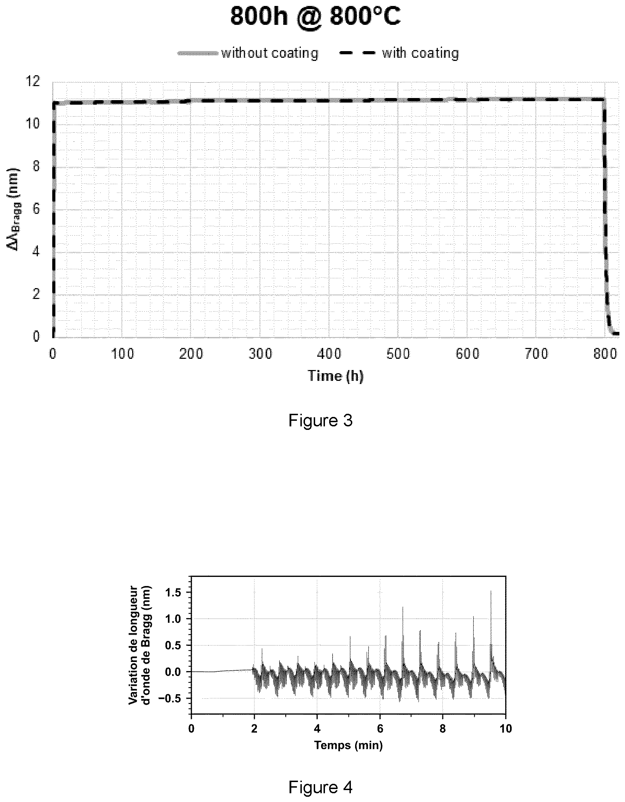

[Fig 3] : La figure 3 représente la variation relative au cours du temps de la réponse d'un réseau de Bragg (Δλ_{Bragg}) sous 800°C pendant 800 heures, pour une fibre nue (en trait continu) et une fibre selon l'invention, munie d'un revêtement comprenant trois couches de revêtement à base de nitrure de bore (en traits pointillés).
[Fig 4] : La figure 4 représente la variation relative au cours du temps de la réponse d'un réseau de Bragg inscrit dans une fibre optique revêtue du matériau à base de nitrure de bore lors de son intégration à l'aide du procédé de projection plasma atmosphérique.

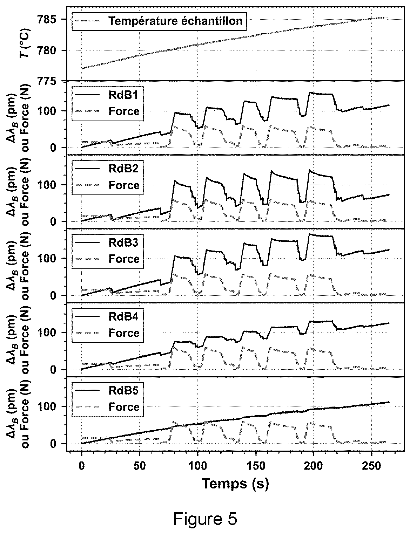

[Fig 5] : La figure 5 représente, d'une part, la variation relative au cours du temps de la réponse de cinq réseaux de Bragg intégrés au sein d'un échantillon parallélépipédique soumis à des chargements répétés en flexion en quatre points. La figure 5 présente d'autre part l'évolution au cours du temps de la température dans l'enceinte d'essai ainsi que celle de la charge mécanique appliquée à l'échantillon.
[Fig 6] : La figure 6 représente un synoptique des différentes étapes permettant la fabrication d'une structure en matériau céramique réalisée par fabrication additive, comprenant au moins un CFO protégé par le revêtement à base de nitrure de bore, selon l'invention.

### EXEMPLES

La nature des produits utilisés pour la fabrication des fibres et le procédé mis en œuvre, ainsi que les procédés de caractérisation sont détaillés ci-après.

### Produits, matières premières :

- solvant pour la dénudation par voie chimique : dichlorométhane, isopropanol ;
- poudre de BN hexagonal ;
- bentonite de formule générale Al₂H₂O₁₂Si₄ ;
- échantillons de fibres optiques (notamment en silice, saphir, ou chalcogénure) comprenant ou non une gaine de protection en polymère organique (par exemple en polyacrylate).

### Dispositifs et tests de caractérisation structurale et microstructurale

Une caractérisation physico-chimique complète a été réalisée avec des techniques complémentaires à différentes échelles pour caractériser la couche de revêtement appliqué en utilisant :
- la microscopie optique,
- l'analyse par Diffraction des Rayons X (DRX),
- test de tenue à température élevée comprenant un chauffage à 1000°C des échantillons de fibres selon l'invention, avec une rampe de chauffage à 10°C/min, suivi d'un refroidissement par inertie ou instantané ;
- détermination du comportement de la réponse Bragg des échantillons de fibres selon l'invention par l'analyse de la réflectivité à la longueur d'onde de Bragg via une source laser large bande et un analyseur de spectre optique.

### EXEMPLE 1 : Fabrication d'un exemple de composition pâteuse C pour revêtement de fibre.

Du nitrure de bore et de la bentonite (à raison d'au moins 10 % en poids de bentonite) sont broyés à l'aide d'un broyeur planétaire, avec une inversion du sens de rotation toutes les 5 minutes (pour une granulométrie satisfaisante).

Le produit de broyage ainsi obtenu est dispersé dans une grande quantité d'eau (environ 250 mL) pour former une suspension.

La suspension ainsi obtenue est évaporée à sec, dans un tube de Schlenk de 500 mL. L'évaporation est faite sous vide primaire (10⁻³ Pa) à l'aide d'une rampe vide/argon. Durant toute la durée de l'opération, le tube de Schlenk est maintenu à 60°C au bain marie, via un bain d'huile. Au bout de 4 à 6 heures d'évaporation : l'extrait obtenu sec est broyé manuellement (mortier et pilon). La poudre obtenue peut être conservée à l'étuve à 50°C ou dans un dessiccateur durant plusieurs mois.

Au moment de faire le dépôt sur fibre, la poudre obtenue est dispersée dans au moins 20 mL d'eau distillée.

On obtient la composition pâteuse selon l'invention C.

### EXEMPLE 2 : Fabrication d'une fibre revêtue de matériau à base de nitrure de bore

### Etape A

On utilise des échantillons de fibres optiques sans gaine de protection. Dans le cas d'une fourniture d'échantillons de fibres optiques commerciales (notamment en silice, saphir, ou chalcogènure) comprenant une gaine de protection en polyacrylate, une étape supplémentaire de dénudation est nécessaire lors d'une étape A'.

### Etape A'

Pour rappel, les fibres optiques, lors de leur fabrication, sont classiquement protégées par des polymères organiques : sans ce revêtement de protection, les fibres optiques sont extrêmement vulnérables aux contacts mécaniques, les rendant difficilement manipulables. Or, ce revêtement organique est par nature incompatible avec un déploiement de la fibre optique en environnement sévère.

Il est donc préférable d'enlever au moins partiellement ce revêtement. Cette opération A' de dénudation est réalisée de préférence par une attaque chimique. L'intérêt de cette étape A' est de dénuder une portion spécifique de la fibre optique, soit à une extrémité soit sur une zone définie au préalable. Généralement, à chaque extrémité de la fibre, le revêtement initial est conservé sur une longueur suffisante de sorte à pouvoir à minima maintenir la fibre en position lors de l'étape de dépôt du revêtement sans la fragiliser. Les longueurs sont ajustées en fonction du type d'application visée.

Le solvant utilisé est le dichlorométhane, lorsqu'il s'agit d'une gaine protectrice originelle de type polyacrylate (cas standard).

Si les échantillons de fibres optiques commerciales comprennent une gaine de protection en un polymère autre qu'un polyacrylate et qui n'est pas sensible au dichlorométhane, on utilisera un autre solvant apte à dissoudre ce polymère. Si la gaine de protection est par exemple en polyimide, on utilisera de l'acide chlorhydrique ou de l'acide sulfurique à chaud pour la dissoudre.

L'étape A' de dénudation par voie chimique permet d'éviter une fragilisation de la fibre, contrairement à une dénudation mécanique (à la pince ou à la lame de rasoir).

### Etape B

On utilise la composition pâteuse C de l'exemple 1.

### Etape C

On procède alors à l'enduction d'au moins une partie d'un échantillon de fibre dénudée avec la composition pâteuse C de façon à former une couche humide sur la fibre, par exemple par immersion ou directement sur tour de fibrage.

### Etape D

L'échantillon est ensuite séché. Il peut être placé à l'étuve à 100°C. Le revêtement est sec au toucher après 15 secondes. Après ce traitement, la fibre est enroulable sur une bobine standard (de 158 mm de rayon typiquement). Il peut également être séché dans un four tubulaire verticale directement sur tour de fibrage, en dessous du porte filière. La zone chaude est d'environ 250 mm. La température du four est de 250°C.

### EXEMPLE 3 : caractérisation des revêtements

Différents tests ont été ensuite réalisés pour caractériser les revêtements de BN et de bentonite conformes à l'invention.

Afin de déceler d'éventuelles modifications physico-chimiques du revêtement (rédhibitoires pour les applications visées), les échantillons sont observés au microscope optique, caractérisés en DRX, et sous différentes conditions de température. Le comportement opto-mécanique est également étudié.

Un premier test de tenue en température des revêtements formés à l'exemple 2 a été réalisé à 1000°C, montée 10°C/minutes jusqu'à 1000°C, pendant une durée de 500 heures, puis refroidissement par inertie. La Figure 2 est une observation de l'échantillon sous microscope optique après ce traitement thermique. Ces observations montrent que le revêtement ne présente aucune altération de son intégrité (fissure ou fracture).

D'autres échantillons de fibres possédant des réseaux de Bragg revêtus de BN sont également étudiés sous différents isothermes (à haute et basse températures), afin de valider le critère de non-modification des propriétés opto-mécaniques de la fibre. En effet, il est primordial que le revêtement n'altère pas la sensibilité du capteur qu'il protège. Des cycles de chauffage et refroidissement successifs sont également répétés sur des échantillons avec et sans revêtement afin de valider le bon comportement en dynamique (dilatation thermique des différents matériaux).

De même, le comportement de la réponse Bragg est comparé avec et sans revêtement, comme illustré sur la Figure 3 lors d'un cycle sur plus de 800 heures à 800°C.

### EXEMPLE 4 : Capteur à Fibre Optique intégré dans une éprouvette d'essai mécanique par un procédé de fabrication additive mis en œuvre avec la fibre obtenue à l'exemple 2

### Fabrication des CFOs

Dans cet exemple, les CFOs sont constitués de Réseaux de Bragg (RdBs) multiplexés en longueur d'onde, d'une longueur physique de 1 mm.

Ces RdBs sont inscrits au cœur d'une fibre optique en silice à l'aide d'impulsions laser d'une durée unitaire comprise, ici, entre 100 et 200 fs.

Cette méthode d'inscription permet d'obtenir des RdBs résistant à de hautes températures environnementales (*T* > 800°C).

Les RdBs sont inscrits au travers du revêtement initial de la fibre optique (polymère acrylate), ici transparent aux longueurs d'ondes appartenant au domaine de la lumière visible. Cela permet de conserver l'intégrité mécanique des fibres lors de leur acheminement vers l'étape d'application du revêtement.

Les fibres optiques inscrites de RdBs sont dénudées de leur revêtement initial puis revêtues du matériau de protection à base de nitrure de bore comme décrit dans l'Exemple 2.

Un traitement thermique de stabilisation est appliqué aux CFOs revêtus du matériau de protection.

Ce traitement thermique comprend l'étape présentée dans l'Exemple 2 soit une première étape à 100°C.

Ce traitement thermique est complété d'une étape à 500°C durant 1 h puis à 750°C durant 2 h. Ces étapes servent à stabiliser le matériau de revêtement mais également le RdB inscrit au cœur de la fibre optique.

### Intégration des CFOs

Le procédé de fabrication discuté dans le présent exemple est la projection plasma atmosphérique de matériau céramique.

Une poudre de matériau céramique, ici de la cordiérite (Al₃Mg₂AlSi₅O₁₈) est introduit dans une torche à plasma. Ce plasma est généré en faisant circuler des gaz entre des électrodes entre lesquelles une tension électrique est appliquée, générant un arc électrique.

Les particules de matériau céramique fondent au contact du plasma. Elles sont transportées par celui-ci à une vitesse dépendant des paramètres du procédé connus de l'homme du métier.

Le balayage de la torche plasma par rapport à une surface de fabrication permet de déposer des couches, d'épaisseur de quelques microns par exemple, sur ladite surface.

Dans cet exemple, une première étape a) consiste à déposer une épaisseur millimétrique de matériau afin de former le support d'intégration du CFO, c'est-à-dire une matrice céramique.

Ce support présente une surface de 15 × 45 mm².

Une deuxième étape b) consiste à positionner le CFO revêtu du matériau de protection à base de nitrure de bore sur la matrice céramique. Le CFO est maintenu en position à l'aide d'ajouts ponctuels d'adhésif lors d'une troisième étape c). Il est essentiel d'assurer une tension de la fibre afin qu'elle soit plaquée contre la matrice céramique et ainsi limiter tout mouvement relatif de la fibre par rapport à ladite matrice céramique.

Une quatrième étape d) consiste à déposer une épaisseur complémentaire de cordiérite qui est projetée à la surface de la matrice instrumentée lors de l'étape c) pour noyer le CFO dans la matière.

### Suivi in situ du procédé

L'interrogation continue des RdBs à l'aide d'un instrument adapté permet de suivre l'avancement du procédé de fabrication, c'est-à-dire de dépôt successif de chaque couche de matériau.

Par exemple, la Figure 4 présente le décalage en longueur d'onde de Bragg mesuré par un RdB lors du procédé de projection plasma. Cette réponse est sensible aux variations de déformation et de température au sein du matériau.

L'avantage d'un suivi de procédé par CFO comparativement aux techniques usuellement utilisées, comme la pyrométrie par exemple, réside dans le volume sondé par les CFOs (quelques µm³) bien plus faible que les dites techniques habituelles.

### Essais à haute température

La qualité de l'interface formée entre le CFO revêtu et le matériau déposé par le procédé de projection plasma est étudiée en soumettant l'échantillon instrumenté à des chargements mécaniques en flexion, en faisant varier la température d'essai.

Les températures d'essais sont comprises entre la température ambiante et 800°C, plus précisément 27°C ; 148°C ; 344°C ; 572°C ; 782°C.

Les chargements mécaniques sont appliqués grâce à des appuis de flexion en quatre points positionnés dans l'enceinte asservie en température.

Cinq chargements mécaniques de 60 N chacun sont appliqués à chaque température d'essai.

La réponse des RdBs sous l'effet des chargements mécaniques est présenté dans la Figure 5. Cette réponse diffère suivant la position respective des RdBs suivant la longueur du plot, car l'essai de flexion en quatre points induit un champ de déformation dépendant de la position longitudinale.

L'absence de décrochage notable de la réponse des RdBs sous l'effet du chargement mécanique montre que l'interface conserve son intégrité mécanique jusqu'à la température maximale d'essai.

En effet, un décrochage dans la réponse des RdBs sous l'effet des chargements mécaniques indiquerait une perte de transfert des déformations entre le matériau déposé par projection plasma et les CFOs revêtus du matériau à base de nitrure de bore.

Les différentes étapes décrites dans le cadre du présent exemple sont résumées dans la Figure 6. Dans cette figure, les étapes encadrées sont considérées comme nécessaires à l'obtention d'une pièce en céramique réalisée par FA et instrumentée d'un CFO, et les étapes entre accolades sont optionnelles ou peuvent varier, par exemple, en fonction du procédé choisi.

### LISTE DES REFERENCES

1. Z. Chen, Z. Li, J. Li, C. Liu, C. Lao, Y. Fu, C. Liu, Y. Li, P. Wang, and Y. He, "3D printing of ceramics: A review," Journal of the European Ceramic Society 39, 661-687 (2019).
2. V. P. Wnuk, A. Mendez, S. Ferguson, and T. Graver, "Process for mounting and packaging of fiber Bragg grating strain sensors for use in harsh environment applications," in E. Udd and D. Inaudi, eds. (2005), p. 46.
3. D. Havermann, J. Mathew, W. N. MacPherson, R. R. J. Maier, and D. P. Hand, "Temperature and Strain Measurements With Fiber Bragg Gratings Embedded in Stainless Steel 316," Journal of Lightwave Technology 33, 2474-2479 (2015).
4. Y. Duo, S. Costil, P. Pfeiffer, and B. Serio, "Embedding properties of optical fibers integrated into ceramic coatings obtained by wire flame thermal spray," Smart Mater. Struct. 24, 035027 (2015).
5. L. Huang, R. S. Dyer, R. J. Lago, A. A. Stolov, and J. Li, "Mechanical properties of polyimide coated optical fibers at elevated temperatures," in Optical Fibers and Sensors for Medical Diagnostics and Treatment Applications XVI (International Society for Optics and Photonics, 2016), Vol. 9702, p. 97020Y.
6. J. Lei, Q. Zhang, Y. Song, J. Tang, J. Tong, F. Peng, and H. Xiao, "Laser-assisted embedding of all-glass optical fiber sensors into bulk ceramics for high-temperature applications," Optics & Laser Technology 128, 106223 (2020).
7. C. M. Petrie, A. M. Schrell, D. N. Leonard, Y. Yang, B. C. Jolly, and K. A. Terrani, "Embedded sensors in additively manufactured silicon carbide," Journal of Nuclear Materials 153012 (2021).
8. C. M. Petrie, A. Schrell, D. Leonard, B. C. Jolly, and K. A. Terrani, Demonstration of Embedded Sensors in Ceramic Structures (Oak Ridge National Lab.(ORNL), Oak Ridge, TN (United States), 2020).
9. P. Fauchais, "Dépôts céramiques par PVD ou CVD assistées ou par projection plasma," Techniques de l'ingénieur Frottement, usure et lubrification base documentaire : TIP574WEB., (2013).

## Revendications

1. Utilisation d'une fibre optique dans un procédé de fabrication additive de structures céramiques, ladite fibre (1) comprenant une âme (11) en matériau permettant un fibrage et présentant une surface externe (111), ladite fibre étant **caractérisée en ce qu'**elle comporte en outre un revêtement extérieur (2) comportant un mélange de nitrure de bore hexagonal et de bentonite, à raison d'au moins 10 % en poids de bentonite par rapport au poids total dudit revêtement extérieur (2).

2. Utilisation selon la revendication 1, selon laquelle l'âme (11) de la fibre est constituée d'un matériau choisi parmi les matériaux à transition vitreuse et le verre de saphir.

3. Utilisation selon l'une quelconque des revendications 1 et 2, dans laquelle ledit revêtement extérieur (2) de la fibre (1) est directement en contact avec l'âme (11).

4. Utilisation selon l'une quelconque des revendications 1 à 3, dans laquelle l'âme (11) de ladite fibre (1) présente un diamètre compris dans un intervalle allant de 20 µm à 10 mm, de préférence de 80 µm à 500 µm et de manière encore préférée de 125 µm.

5. Utilisation selon l'une quelconque des revendications 1 à 4, selon laquelle le revêtement extérieur (2) de la fibre (1) présente une épaisseur comprise entre 5 µm et 240 µm.

6. Structures céramiques, de préférence choisies parmi
- aube de turbines/stators,
- rotor,
- moule de fonderie,
- élément de liaison, de préférence des engrenages,
- structure poreuse, de préférence un filtre,
comportant un composant optique comprenant une ou plusieurs fibres optiques (1) telles que définies selon les revendications précédentes.

7. Utilisation selon l'une quelconque des revendications 1 à 5, dans laquelle le procédé de fabrication additive comprend les étapes :
a) fabrication d'une matrice céramique à partir d'un matériau céramique,
b) mise en contact d'au moins une fibre (1) telle que décrite dans l'une quelconque des revendications 1 à 5 avec la matrice céramique obtenue à l'étape a) ;
c) fixation de la au moins une fibre (1) à la surface de la matrice céramique, éventuellement à l'aide d'éléments en périphérie de la zone de fabrication, de manière à limiter tout mouvement relatif de ladite fibre (1) par rapport à la matrice céramique.
d) fabrication d'un volume de matière complémentaire recouvrant totalement ou partiellement la fibre (1).

8. Utilisation selon l'une quelconque des revendications 1 à 5 et 7, dans laquelle le procédé de fabrication additive est choisi parmi un procédé de projection plasma ou de projection thermique, l'extrusion de matériau, le dépôt d'énergie dirigé, la fabrication d'objets laminés la fusion sélective sur lit de poudre, le frittage sélectif sur lit de poudre, la projection de liant, la photopolymérisation.

9. Procédé de fabrication par projection plasma atmosphérique d'une structure céramique instrumentée d'un capteur à fibre optique, CFO, selon la revendication 6, comprenant les étapes :
a') fabrication d'une matrice céramique à partir d'un matériau céramique par projection plasma atmosphérique,
b') mise en contact d'au moins une fibre (1) telle que décrite dans l'une quelconque des revendications 1 à 5 avec la matrice céramique obtenue à l'étape a') et obtention d'une matière instrumentée ;
c') positionnement de la matrice instrumenté obtenue à l'étape b') dans une enceinte de dépôt et dépôt, couche-par-couche, d'un matériau céramique, par projection plasma atmosphérique sur la matrice instrumentée et intégration de la au moins une fibre (1) ; et obtention d'une structure céramique instrumentée d'un CFO.

10. Procédé de fabrication d'une structure céramique selon la revendication 6, comprenant les étapes :
i) fabrication d'une matrice céramique à partir d'un matériau céramique dans une enceinte via un dépôt, couche-par-couche du matériau céramique,
ii) mise en contact d'au moins une fibre (1) telle que décrite dans l'une quelconque des revendications 1 à 5 avec la matrice céramique réalisée à l'étape i) et obtention d'une matrice instrumentée ;
iii) positionnement de la matrice instrumentée obtenue à l'étape ii) dans une enceinte de dépôt et dépôt, couche-par-couche, du matériau céramique sur la matrice instrumentée afin d'intégrer au moins une fibre (1), en recouvrant totalement ou partiellement au moins une fibre (1) dudit matériau céramique ; et obtention d'une structure instrumentée d'un CFO,
iv) mise en contact d'au moins une autre fibre (1) avec la matrice fabriquée lors de l'étape iii) tel que décrit dans l'étape ii) et dépôt d'une nouvelle épaisseur de matrice pour intégrer ces fibres tel que décrit dans l'étape iii), le nombre d'itération de l'étape iii) étant supérieur ou égal à 1, de préférence de 1 à 5 itérations,
v) optionnellement post traitement physico-chimique de la pièce obtenue à la suite des étapes précédente, en l'immergeant ou non dans un solvant organique, en l'exposant ou non à des températures supérieures à 200°C ,
vi) optionnellement traitement thermique de la pièce obtenue à l'étape v), ledit traitement consistant à exposer la pièce à une température supérieure à 600°C.

11. Procédé de fabrication d'une structure céramique selon la revendication 6, comprenant les étapes :
i') fabrication d'une matrice céramique à partir d'un matériau céramique dans une enceinte de dépôt, via un dépôt, couche-par-couche du matériau céramique,
ii') mise en contact d'au moins une fibre (1) telle que décrite dans l'une quelconque des revendications 1 à 5 et de la matrice céramique réalisée à l'étape i'), à l'intérieur de l'enceinte de dépôt ;
iii') dépôt, couche-par-couche, d'un matériau céramique sur la matrice instrumentée en recouvrant totalement ou partiellement la au moins une fibre (1) dudit matériau céramique, afin d'intégrer les fibres (1), et obtention d'une structure instrumentée d'un CFO, le nombre d'itération de l'étape iii') étant supérieur ou égal à 1, de préférence de 1 à 5 itérations,
iv') optionnellement post traitement physico-chimique de la pièce obtenue à la suite des étapes précédentes, par immersion dans un solvant organique, et/ou exposition à une température supérieure à 200°C.
v') optionnellement traitement thermique de la pièce prétraitée obtenue à l'étape d'), ledit traitement consistant à exposer la pièce à une température supérieure à 600°C.

## Patentansprüche

1. Verwendung einer optischen Faser in einem additiven Herstellungsverfahren von keramischen Strukturen, wobei die Faser (1) einen Kern (11) aus einem faserfähigen Material umfasst und eine Außenfläche (111) aufweist, wobei die Faser **dadurch gekennzeichnet ist, dass** sie ferner eine Außenbeschichtung (2) aufweist, die eine Mischung aus hexagonalem Bornitrid und Bentonit in einem Gewichtsanteil von mindestens 10 % Bentonit, bezogen auf das Gesamtgewicht der Außenbeschichtung (2), aufweist.

2. Verwendung nach Anspruch 1, wobei der Kern (11) der Faser aus einem Material besteht, das aus Glasübergangsmaterialien und Saphirglas ausgewählt ist.

3. Verwendung nach einem der Ansprüche 1 und 2, wobei die Außenbeschichtung (2) der Faser (1) in direktem Kontakt mit dem Kern (11) steht.

4. Verwendung nach einem der Ansprüche 1 bis 3, wobei der Kern (11) der Faser (1) einen Durchmesser im Bereich von 20 µm bis 10 mm, vorzugsweise von 80 µm bis 500 µm und noch bevorzugter von 125 µm aufweist.

5. Verwendung nach einem der Ansprüche 1 bis 4, wobei die Außenbeschichtung (2) der Faser (1) eine Dicke zwischen 5 µm und 240 µm aufweist.

6. Keramische Strukturen, vorzugsweise ausgewählt aus Folgendem:
- Turbinenschaufeln/Statoren,
- Rotor,
- Gießform,
- Verbindungselement, vorzugsweise Zahnrädern,
- poröser Struktur, vorzugsweise einem Filter,
der eine optische Komponente aufweist, die eine oder mehrere optische Fasern (1) nach den vorhergehenden Ansprüchen umfasst.

7. Verwendung nach einem der Ansprüche 1 bis 5, wobei das additive Herstellungsverfahren folgende Schritte umfasst:
a) Herstellen einer Keramikmatrix aus einem Keramikmaterial,
b) Kontaktieren mindestens einer Faser (1), wie in einem der Ansprüche 1 bis 5 beschrieben, mit der in Schritt a) erhaltenen Keramikmatrix;
c) Befestigen der mindestens einen Faser (1) an der Oberfläche der Keramikmatrix, gegebenenfalls mithilfe von Elementen am Umfang des Herstellungsbereichs, so dass jede relative Bewegung der Faser (1) in Bezug auf die Keramikmatrix begrenzt wird.
d) Herstellen eines zusätzlichen Materialvolumens, das die Faser (1) ganz oder teilweise bedeckt.

8. Verwendung nach einem der Ansprüche 1 bis 5 und 7, wobei das additive Herstellungsverfahren aus einem Plasmaspritzverfahren oder einem thermischen Spritzverfahren, der Materialextrusion, der gerichteten Energieabscheidung, der Herstellung von laminierten Objekten, dem selektiven Schmelzen auf einem Pulverbett, dem selektiven Sintern auf einem Pulverbett, dem Bindemittelspritzen und der Lichtpolymerisation ausgewählt ist.

9. Verfahren zur Herstellung durch atmosphärische Plasmaspritzung einer instrumentierten keramischen Struktur eines optischen Fasersensors, CFO, nach Anspruch 6, umfassend die folgenden Schritte:
a') Herstellen einer keramischen Matrix aus einem keramischen Material durch atmosphärische Plasmaspritzung,
b') Kontaktieren mindestens einer Faser (1), wie in einem der Ansprüche 1 bis 5 beschrieben, mit der in Schritt a') erhaltenen Keramikmatrix und Erhalten eines instrumentierten Materials;
c') Positionieren der in Schritt b') erhaltenen instrumentierten Matrix in einem Abscheidegehäuse und Schicht-für-Schicht-Abscheiden eines keramischen Materials durch atmosphärische Plasmaspritzung auf die instrumentierte Matrix und Integrieren der mindestens einen Faser (1); und Erhalten einer instrumentierten keramischen Struktur eines CFO.

10. Verfahren zur Herstellung einer keramischen Struktur nach Anspruch 6, umfassend die folgenden Schritte:
i) Herstellen einer keramischen Matrix aus einem keramischen Material in einem Gehäuse durch Schicht-für-Schicht-Abscheiden des keramischen Materials,
ii) Kontaktieren mindestens einer Faser (1), wie in einem der Ansprüche 1 bis 5 beschrieben, mit der in Schritt i) hergestellten Keramikmatrix und Erhalten einer instrumentierten Matrix;
iii) Positionieren der in Schritt ii) erhaltenen instrumentierten Matrix in einem Abscheidegehäuse und Schicht-für-Schicht-Abscheiden des keramischen Materials auf die instrumentierte Matrix, um mindestens eine Faser (1) zu integrieren, indem mindestens eine Faser (1) des keramischen Materials ganz oder teilweise bedeckt wird; und Erhalten einer instrumentierten Struktur eines CFO,
iv) Kontaktieren mindestens einer anderen Faser (1) mit der in Schritt iii) hergestellten Matrix, wie in Schritt ii) beschrieben, und Abscheiden einer neuen Matrixdicke, um diese Fasern zu integrieren, wie in Schritt iii) beschrieben, wobei die Iterationszahl von Schritt iii) größer oder gleich 1, vorzugsweise 1 bis 5 Iterationen, ist,
v) wahlweise physikalisch-chemische Nachbehandlung des nach den vorangegangenen Schritten erhaltenen Teils, durch Eintauchen oder Nichteintauchen in ein organisches Lösungsmittel und durch dessen Aussetzen oder Nichtaussetzen gegenüber Temperaturen von über 200 °C,
vi) wahlweise Wärmebehandlung des in Schritt v) erhaltenen Teils, wobei die Behandlung darin besteht, das Teil einer Temperatur von mehr als 600 °C auszusetzen.

11. Verfahren zur Herstellung einer keramischen Struktur nach Anspruch 6, umfassend die folgenden Schritte:
i') Herstellen einer keramischen Matrix aus einem keramischen Material in einem Abscheidegehäuse durch Schicht-für-Schicht-Abscheiden des keramischen Materials,
ii') Berühren von mindestens einer Faser (1), wie in einem der Ansprüche 1 bis 5 beschrieben, und der in Schritt i') hergestellten Keramikmatrix innerhalb des Abscheidegehäuses;
iii') Schicht-für-Schicht-Abscheiden eines keramischen Materials auf der instrumentierten Matrix, indem die mindestens eine Faser (1) des keramischen Materials ganz oder teilweise bedeckt wird, um die Fasern (1) zu integrieren, und Erhalten einer instrumentierten Struktur eines CFO, wobei die Iterationszahl des Schritts iii') größer oder gleich 1, vorzugsweise 1 bis 5 Iterationen, ist,
iv') wahlweise physikalisch-chemische Nachbehandlung des nach den vorangegangenen Schritten erhaltenen Teils durch Eintauchen in ein organisches Lösungsmittel und/oder Aussetzen gegenüber einer Temperatur von über 200 °C,
v') optional Wärmebehandlung des in Schritt d') erhaltenen vorbehandelten Teils, wobei die Behandlung darin besteht, das Teil einer Temperatur von mehr als 600 °C auszusetzen.

## Claims

1. Use of an optical fibre in a method for the additive manufacturing of ceramic structures, said fibre (1) comprising a core (11) which is made of a material that allows fibre drawing and has an external surface (111), said fibre being **characterised in that** it further comprises an external coating (2) which comprises a mixture of hexagonal boron nitride and bentonite in a ratio of at least 10% by weight of bentonite with respect to the total weight of said external coating (2).

2. Use according to claim 1, wherein the core (11) of the fibre consists of a material selected from glass-transition materials and sapphire glass.

3. Use according to either of claims 1 and 2, wherein said external coating (2) of the fibre (1) is directly in contact with the core (11).

4. Use according to any one of claims 1 to 3, wherein the core (11) of said fibre (1) has a diameter within an interval ranging from 20 µm to 10 mm, preferably from 80 µm to 500 µm, and more preferably of 125 µm.

5. Use according to any one of claims 1 to 4, wherein the external coating (2) of the fibre (1) has a thickness between 5 µm and 240 µm.

6. Ceramic structures, preferably selected from
- a turbine blade or stator vane,
- a rotor,
- a metal casting mould,
- a connecting element, preferably for gears,
- a porous structure, preferably a filter,
comprising an optical component comprising one or more optical fibres (1) as defined according to the preceding claims.

7. Use according to any one of claims 1 to 5, wherein the additive manufacturing method comprises the steps of:
a) manufacturing a ceramic matrix from a ceramic material,
b) bringing at least one fibre (1) as described in any one of claims 1 to 5 into contact with the ceramic matrix obtained in step a);
c) fastening the at least one fibre (1) to the surface of the ceramic matrix, possibly with the aid of elements at the periphery of the manufacturing zone, so as to limit any relative movement of said fibre (1) with respect to the ceramic matrix.
d) manufacturing a volume of complementary material totally or partially covering the fibre (1).

8. Use according to any one of claims 1 to 5 and 7, wherein the additive manufacturing method is selected from a plasma spraying or thermal spraying method, material extrusion, directed energy deposition, the manufacture of laminated objects, selective powder bed fusion, selective powder bed sintering, binder jetting, photopolymerisation.

9. Method for manufacturing by atmospheric plasma spraying an instrumented ceramic structure of an optical fibre sensor, OFS according to claim 6, comprising the steps of:
a') manufacturing a ceramic matrix from a ceramic material by atmospheric plasma spraying,
b') bringing at least one fibre (1) as described in any one of claims 1 to 5 into contact with the ceramic matrix obtained in step a') and obtaining an instrumented material;
c') positioning the instrumented matrix obtained in step b') in a deposition chamber and depositing a ceramic material, layer by layer, by atmospheric plasma spraying onto the instrumented matrix and integrating the at least one fibre (1); and obtaining a ceramic structure instrumented of an OFS.

10. Method for manufacturing a ceramic structure according to claim 6, comprising the steps of:
i) manufacturing a ceramic matrix from a ceramic material in a chamber by depositing the ceramic material layer by layer,
ii) bringing at least one fibre (1) as described in any one of claims 1 to 5 into contact with the ceramic matrix produced in step i) and obtaining an instrumented matrix;
iii) positioning the instrumented matrix obtained in step ii) in a deposition chamber and depositing the ceramic material, layer by layer, onto the instrumented matrix in order to integrate at least one fibre (1), while totally or partially covering at least one fibre (1) with said ceramic material; and obtaining an instrumented structure of an OFS,
iv) bringing at least one other fibre (1) into contact with the matrix manufactured during step iii) as described in step ii) and depositing a new matrix thickness in order to integrate these fibres as described in step iii), the number of iterations of step iii) being greater than or equal to 1, preferably from 1 to 5 iterations,
v) optionally physicochemically post-treating the part obtained after the preceding steps, by immersing it or not in an organic solvent, or by exposing it or not to temperatures greater than 200°C,
vi) optionally heat-treating the part obtained in step v), said treatment consisting in exposing the part to a temperature greater than 600°C.

11. Method for manufacturing a ceramic structure according to claim 6, comprising the steps of:
i') manufacturing a ceramic matrix from a ceramic material in a deposition chamber by depositing the ceramic material layer by layer,
ii') bringing at least one fibre (1) as described in any one of claims 1 to 5 and the ceramic matrix produced in step i') into contact inside the deposition chamber;
iii') depositing a ceramic material, layer by layer, onto the instrumented matrix while completely or partially covering the at least one fibre (1) with said ceramic material in order to integrate the fibres (1), and obtaining an instrumented structure of an OFS, the number of iterations of step iii') being greater than or equal to 1, preferably from 1 to 5 iterations,
iv') optionally physicochemically post-treating the part obtained after the preceding steps by immersing in an organic solvent and/or exposing to a temperature greater than 200°C.
v') optionally heat-treating the pretreated part obtained in step d'), said treatment consisting in exposing the part to a temperature greater than 600°C.
